# EUROPEAN PATENT APPLICATION

(11) **EP 3 611 693 A1**
(43) Date of publication of application: **19.02.2020**
(21) Application number: 17905204.8
(22) Date of filing: 11.04.2017
(51) Int. Cl.: G06T 5/50

(54) **PICTURE PROCESSING METHOD AND DEVICE**

(71) Applicant: Shenzhen Royole Technologies Co., Ltd., Shenzhen, Guangdong 518052 (CN)
(72) Inventor: YANG, Qin, Shenzhen Guangdong 518052 (CN); ZHAO, Cong, Shenzhen Guangdong 518052 (CN); NIU, Jiaming, Shenzhen Guangdong 518052 (CN); ZHONG, Zhaoyu, Shenzhen Guangdong 518052 (CN); HUANG, Zheng, Shenzhen Guangdong 518052 (CN)
(74) Representative: Hamer, Christopher K.
(86) International application number: PCT/CN2017/080106
(87) International publication number: WO 2018/187941

(57) **Abstract**

A picture processing method and device. The method comprises: a picture processing device collecting N pictures for the same object at K positions, K being an integer greater than or equal to 1, and N being greater than or equal to K (S101); and the picture processing device horizontally splicing at least two of the N pictures to generate a 3D picture, the horizontal splicing being splicing two pictures with overlapping parts into one seamless picture (S102). The method and device are advantageous for solving the problems of high cost, poor visual effect, complicated 2D/3D display switching and low practicability.

## Description

### TECHNICAL FIELD

The present disclosure relates to a field of image processing, and more particularly, to an image processing method and an image processing device.

### BACKGROUND

In recent years, three-dimensional (3D) imaging technology has been widely used in the commercial field. The 3D technology has spread to development and production of cultural and artistic products for visual expression such as movie and television cartoon, animation and games; design and production of physical products such as automobiles, airplanes, household appliances and furniture; and simulation and analogue of virtual reality for interaction between people and the environment.

In the prior art, a pseudo 3D effect is realized mainly by layering images and superposing layers, or a 3D effect is realized by optical principle, or a 3D effect is realized by taking two images with parallax using a double camera equipment. However, extra optical structures are needed to add into these methods of realizing 3D imaging, which has problems of high cost, poor visual effect, complicated 2D/3D display switching and low practicability.

### SUMMARY

Implementations of the present disclosure provide an image processing method and an image processing device, which are beneficial to solving the problems of high cost, poor visual effect, complicated 2D/3D display switching and low practicability.

In a first aspect, an image processing method is provided in present disclosure, including:
An image processing device acquiring N images of the same object at K positions, where the K is an integer greater than or equal to 1, and the N is greater than or equal to K; and
The image processing device horizontally splicing at least two of the N images, to generate a 3D image, and horizontally splicing is to splice the images having overlapping parts into at least one seamless image.

In a second aspect, an image processing device is provided in present disclosure, including:
An acquisition module configured to acquire N images of the same object at K positions, the K is an integer greater than or equal to 1, and the N is greater than or equal to K; and
A generation module configured to horizontally splice at least two of the N images to generate a 3D image, and horizontally splicing is to splice the images having overlapping parts into at least one seamless image.

In a third aspect, an image processing device is provided in present disclosure, including:
A storage storing executable program; and
A processor coupled to the storage;

The processor executes the executable program stored in the storage to perform some or all of the steps described in the first aspect of the embodiments of the present disclosure.

It can be seen that in the scheme of the embodiments of the present disclosure, the image processing device acquires N images of the same object at K positions, and then horizontally splices at least two of the N images to generate a 3D image. Compare with prior art, at least two images with slightly different position or angles are spliced to realize a 3D effect based on human left and right eye imaging, which is beneficial to solving problems of high cost, poor visual effect, complicated 2D/3D display switching and low practicability.

### BRIEF DESCRIPTION OF THE DRAWINGS

In order to more clearly explain the technical scheme in the embodiments of the present disclosure, drawings that need to be used in the embodiments will be briefly introduced below. Obviously, the drawings in the following description are only some embodiments of the present disclosure. For those of ordinary skilled in the art, other drawings can be obtained without paying creative work.
Fig. 1 is a flowchart of an image processing method according to an implementation of the present disclosure;
Fig. 2 is a flowchart of another image processing method according to an implementation of the present disclosure;
Fig. 3 is a schematic view of structure of an image processing device according to an implementation of the present disclosure;
Fig. 4 is a schematic view of partial structure of an image processing device according to an implementation of the present disclosure; and
Fig. 5 is a schematic view of structure of another image processing device according to an implementation of the present disclosure.

### DETAILED DESCRIPTION

The technical solution in the embodiment of the present disclosure will be described clearly and completely below with reference to the drawings in the embodiment of the present disclosure. Obviously, the described embodiment is only a part of the embodiment of the present disclosure, not all of the embodiments. Based on the embodiments of the present disclosure, all other embodiments obtained by a person of ordinary skilled in the art without creative work are within the scope of the present disclosure.

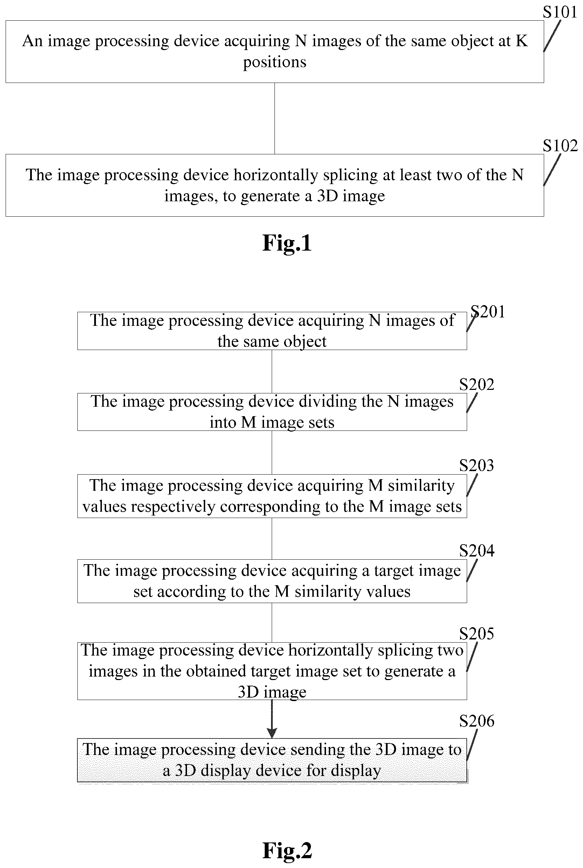

Referring to Fig. 1, Fig. 1 is a flowchart of an image processing method according to an implementation of the present disclosure. As shown in Fig. 1, the method includes actions defined by the following blocks:
At block 101, an image processing device acquires N images of the same object at K positions.

Where the K is an integer greater than or equal to 1, and the N is greater than or equal to K.

Where, when the K is greater than 1, the image processing device acquires N images of the same object at K positions, includes:
The image processing device acquires a first image at a position i, where i=1, 2, 3..., K- 1;

The image processing device acquires a second image at a position i+1, which is a position obtained by moving the image processing device towards a target direction by a preset offset starting from the position i; acquiring images is repeated until N images are acquired.

Where the number of the first image is at least one and the number of the second image is at least one. A total number of images acquired by the image processing device at the positions 1, 2, 3..., and K is N.

In one embodiment, the moving the image processing device towards the target direction by the preset offset, includes the following actions:
The image processing device is moved by a first offset towards a first direction; or
The image processing device is moved by a second offset towards a second direction; or
The image processing device is moved by a first offset towards a first direction and then is moved by a second offset towards a second direction.

Where the first direction includes a vertical upward direction and a vertical downward direction, and the second direction includes a horizontal leftward direction and a horizontal rightward direction.

In one exampled embodiment, the first offset is greater than or equal to 0 and less than or equal to 4 centimeters (cm), such as 1cm, 1.5cm, 2cm, 2.5cm, 4cm or other values.

In one exampled embodiment, the second offset is greater than or equal to 1cm and less than or equal to 20cm, such as 1cm, 2cm, 5cm, 7cm, 10cm, 15cm, 20cm or other values.

It should be noted that, in a practical application, the preset offset for objects in different conditions has different ranges, and the preset offset of close range is smaller than the preset offset of long range. For example, for objects in close range, the second offset is greater than or equal to 1cm and less than 7 cm; for objects in long range, the second offset is greater than or equal to 7cm and less than or equal to 20cm.

For example, the K is 5 and the N is 10. The image processing device acquires two images of one same object at a position 1. Based on the position 1, the image processing device moves towards a vertical upward direction by 1cm and then towards a horizontal rightward direction by 4cm to arrive at a position 2, then the image processing device acquires two images of the object. Based on the position 2, the image processing device moves towards a vertical upward direction by 1cm and then towards a horizontal leftward direction by 6cm to arrive at a position 3, then the image processing device acquires one image of the object. Based on the position 3, the image processing device moves towards a vertical downward direction by 3cm and towards a horizontal rightward direction by 2cm to arrive at a position 4, then the image processing device acquires two images of the object. Based on the position 4, the image processing device moves towards a vertical upward direction by 2cm and then towards a horizontal rightward direction by 7cm to arrive at a position 5, then the image processing device acquires three images of the object. A total number of images of the object acquired by the image processing device at positions 1, 2, 3, 4 and 5 is 10, and the image processing device then finishes acquiring images of the object.

In one exampled embodiment, when the K is equal to 1, the image processing device acquires N images of the same object at K positions, includes:
The image processing device acquires a third image at an angle I;
The image processing device acquires a fourth image at an angle 1+1, which is an angle obtained by rotating the image processing device around a rotating axis towards a third direction by a third offset, which rotating axis is a central axis of the image processing device at the angle I; acquiring images is repeated until N images are acquired.

Where the number of the third image is at least one and the number of the fourth image is at least one. A total number of images acquired by the image processing device at the positions 1, 2, 3..., and K is N.

In one exampled embodiment, the third offset is greater than or equal to 3 degrees and less than or equal to 60 degrees, such as 3 degrees, 4 degrees, 7 degrees, 10 degrees, 17 degrees, 60 degrees, or other values.

It should be noted that in practical application, the third offset has different value ranges for objects in different conditions, and the third offset of close range is smaller than the third offset of long range. For example, for objects in close range, the third offset is greater than or equal to 3 degrees and less than 17 degrees; for objects in long range, the third offset is greater than or equal to 17 degrees and less than or equal to 60 degrees.

The distance between the object in long range and the image processing device is no more than 50m.

For example, the N is 10. The image processing device acquires three images of the same object at an angle of 1. Based on the angle 1, the image processing device rotates counterclockwise around the central axis of which by 5 degrees to arrive at an angle 2, then the image processing device acquires two images of the object. Based on the angle 2, the image processing device rotates counterclockwise around the central axis of which by 3 degrees to arrive at an angle 3, then the image processing device acquires one image of the object. Based on the angle 3, the image processing device rotates clockwise around the central axis of which by 5 degrees to arrive at an angle 4, then the image processing device acquires two images of the object. Based on the angle 1, the image processing device rotates counterclockwise around the central axis of which by 5 degrees to arrive at an angle 5, then the image processing device acquires two images of the object. The total number of images acquired by the image processing device for the object at angles 1, 2, 3, 4 and 5 is 10, and the image processing device then finishes acquiring images of the object.

Where the image processing device sends an alarm message when the preset offset by which the image processing device moving towards the target direction exceeds a first threshold, or, when the third offset by which the image processing device rotating towards the third direction exceeds a second threshold.

In one exampled embodiment, the alarm message includes a first alarm message, a second alarm message, or a third alarm message.

In a specific application condition, the target direction is the first direction, a value of the second threshold is 4cm, and the alarm message is the first alarm message. During acquiring images for the same object, if the first offset by which the image processing device moving towards the first direction is greater than 4cm, the image processing device sends the first alarm message to inform the user that the first offset exceeds 4cm.

In a specific application condition, the target direction is the second direction, a value of the second threshold is in a first preset range, the first preset range is greater than or equal to 1cm and less than or equal to 20cm, and the alarm message is the second alarm message. During acquiring images for the same object, if the second offset by which the image processing device moving towards the second direction is less than 1cm or greater than 20cm, the image processing device sends the second alarm message to inform the user that the second offset is beyond the first preset range.

In a specific application condition, a value of the second threshold is in a second preset range, the second preset range is greater than or equal to 3 degrees and less than or equal to 60 degrees, and the alarm message is the third alarm message. During acquiring images for the same object, if the third offset by which the image processing device rotating towards the third direction is less than 3 degrees or more than 60 degrees, the image processing device sends the third alarm message to inform the user that the third offset is beyond the second preset range.

At block 102, the image processing device horizontally splices at least two of the N images, to generate a 3D image, and horizontally splicing refers to splicing the images having overlapping parts into at least one seamless image.

The method also includes:
The image processing device determines similarity of M image sets to obtain M similarity values, the M image sets respectively correspond to the M similarity values, and each image set of the M image sets includes two images, and which includes one of the first image and the second image, or, one of the third image and the fourth image; and
The image processing device determines a target image set, where the target image set is one of the M image sets and the corresponding similarity value of the target image set satisfies a preset condition;
The image processing device horizontally splices at least two of the N images, to generate the 3D image, includes:
The image processing device horizontally splices two images in the target image set, to generate the 3D image.

For example, the image processing device respectively acquires N₁ images, N₂ images, N₃ images, N₄ images and N₅ images of the same object at five different positions, where N = N₁ + N₂ + N₃ + N₄ + N₅, then M= N₁N₂+ N₂N₃ + N₃N₄ + N₄N₅. The image processing device respectively acquires n₁ images, n₂ images, n₃ images and n₄ images of the same object at four different angles, where N= n₁ + n₂ + n₃ + n₄, then M= n₁ n₂ + n₂ n₃ +n₃ n₄.

Specifically, the image set includes image A and image B. Acquiring positions of the image A and the image B are adjacent in sequence, or acquiring angles of the image A and the image B are adjacent in sequence.

Where the target image set has the highest similarity value among W image sets, and the W image sets belong to the M image sets, and the similarity values of the W image sets meet the a preset condition.

Specifically, the image processing device obtains the similarity value of any one of the M image sets, specifically includes: first, the image processing device performs a gray-scale processing on two images in the image set to obtain two gray-scale images; secondly, the image processing device compresses the two gray images to obtain two compressed images with a compression ratio ranging from 30 % to 50 %; finally, the image processing device compares the two compressed images pixel by pixel to obtain the similarity values. According to this method, M similarity values respectively corresponding to M image sets are obtained.

The image processing device selects image sets from the M image sets, wherein the similarity value of selected image sets meets the preset condition, and the number of the selected image sets is indicated by W. The target image set has the highest similarity value among the W image sets.

Where, the preset condition is that the similarity value of the image set is greater than or equal to 50 % and less than or equal to 80 %. Alternatively, the similarity values in the preset condition may be 50 %, 56 %, 58 %, 60 %, 70 %, 80 %, or other values.

Furthermore, the resolution of the two images in the target image set is higher than a preset resolution.

In one exampled embodiment, after the 3D image is generated, the image processing device wirelessly transmits the 3D image to a matched device used for 3D display, such as a head-mounted device. A wirelessly transition can be Wi-Fi, Bluetooth, RFID, and etc. transition. User can see a 3D composite image by the 3D display device.

In one exampled embodiment, after the 3D image is generated, the image processing device wirelessly transmits the 3D image to a matched and normal 3D display device, which can also directly display a 3D composite image.

In one exampled embodiment, the method further includes:
When the similarity values of the M image sets all fail to meet the a preset condition, the image processing device sends a reminder message to remind users to re-acquire images.

It can be seen that in the embodiment of the present disclosure, the image processing device acquires N images of the same object at K positions, and then horizontally splices at least two of the N images to generate 3D images. Compare with prior art, at least two images with slightly different position or angles are spliced to realize a 3D effect based on human left and right eye imaging, which is beneficial to solving problems of high cost, poor visual effect, complicated 2D/3D display switching and low practicability.

Referring to Fig. 2, Fig. 2 is a flowchart of another image processing method according to an implementation of the present disclosure. As shown in Fig. 2, the method includes actions defined by the following blocks:
At block 201, the image processing device acquires N images of the same object.

Where, the image processing device acquires N images of the same object at different positions or different angles.

At block 202, the image processing device divides the N images into M image sets.

At block 203, the image processing device acquires M similarity values respectively corresponding to the M image sets.

Specifically, the image processing device performs a gray-scale processing on two images in any of the M image sets to obtain two gray-scale images; then the image processing device compresses the two gray-scale images to obtain two compressed images; then, the image processing device compares the two compressed images pixel by pixel to obtain the similarity value of the two images. According to this method, M similarity values are obtained, and the M similarity values respectively correspond to the M image sets.

At block 204, the image processing device acquires a target image set according to the M similarity values.

Where the image processing device selects image sets meeting a preset condition from the M image sets according to the M similarity values, and the number of the selected image sets is W. The image processing device selects an image set having the highest similarity value from the W image sets as a target image set.

At block 205, the image processing device horizontally splices two images in the obtained target image set to generate a 3D image.

At block 206, the image processing device sends the 3D image to a 3D display device for display.

It should be noted that the specific implementation process of each step of the method shown in Fig. 2 can be referred to the specific implementation process described in the above method and will not be described here.

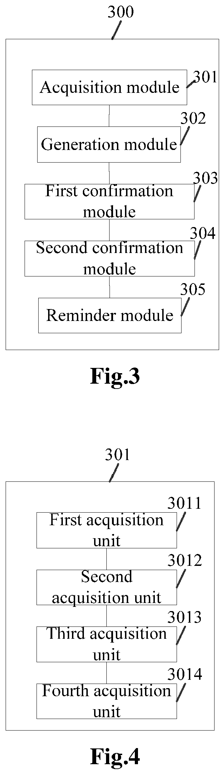

Referring to Fig. 3, Fig. 3 is a schematic view of structure of an image processing device according to an implementation of the present disclosure. As shown in Fig. 3, the device 300 includes:

An acquisition module 301 configured to acquire N images of the same object at K positions.

Where the K is an integer greater than or equal to 1, and the N is greater than or equal to K.

In one exampled embodiment, when the K is greater than 1, the acquisition module 401 includes:
A first acquisition unit 3011 configured to acquire a first image at a position i, where i=1, 2, 3..., K-1;

A second acquisition unit 3012 configured to acquire a second image at a position i+1, which is a position obtained by moving the image processing device towards a target direction by a preset offset starting from the position i; acquiring images is repeated until N images are acquired.

In one exampled embodiment, the moving the image processing device towards the target direction by the preset offset, includes the following actions:
The image processing device is moved by a first offset towards a first direction; or,
The image processing device is moved by a second offset towards a second direction; or,
The image processing device is moved by the first offset towards the first direction and then is moved by the second offset towards the second direction.

Where the first direction includes a vertical upward direction and a vertical downward direction, and the second direction includes a horizontal leftward direction and a horizontal rightward direction.

In one exampled embodiment, when the K is equal to 1, the acquisition module 301 includes:

A third acquisition unit 3013 configured to acquire a third image at an angle I, where 1=1, 2, 3..., N-1;

A fourth acquisition unit 3014 configured to acquire a fourth image at the angle 1+1, which is an angle obtained by rotating the image processing device around a rotating axis towards a third direction by a third offset, which rotating axis is a central axis of the image processing device at the angle I; acquiring images is repeated until N images are acquired.

In one exampled embodiment, the image processing device sends an alarm message when the preset offset by which the image processing device moving towards the target direction exceeds a first threshold, or, when the third offset by which the image processing device rotating towards the third direction exceeds a second threshold.

A generation module 302 configured to horizontally splice at least two of the N images to generate a 3D image, and horizontally splicing refers to splicing the images having overlapping parts into at least one seamless image.

In one exampled embodiment, the image processing device 300 further comprise includes:
A first confirmation module 303 configured to determine similarity of M image sets to obtain M similarity values, the M image sets respectively correspond to the M similarity values, and each image set of the M image sets includes two images, and which includes one of the first image and the second image, or, one of the third image and the fourth image;
A second confirmation module 304 configured to determine a target image set which is one of the M image sets and the corresponding similarity value of which meets a preset condition;
The generation module 302 is specifically configured to horizontally splice at least two of the N images, to generate the 3D image.

In one exampled embodiment, the target image set has the highest similarity value among the W image sets, and the W image sets belong to the M image sets, and the similarity values of the W image sets meet the preset condition.

In one exampled embodiment, the resolution of the at least two images in the target image set is higher than a preset resolution.

In one exampled embodiment, the image processing device 300 further includes:
A reminder module 305 configured to send a reminder message to remind users to re-acquire images when the similarity values of the M image sets all fail to meet the a preset condition.

It should be noted that the above-mentioned modules (the acquisition module 301, the generation module 302, the first confirmation module 303, the second confirmation module 304, and the reminder module 305) are used to perform the relevant steps of the above-mentioned method for determining the driving track.

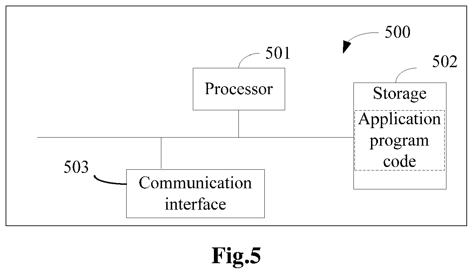

The "module" in this embodiment may be an application-specific integrated circuit (ASIC), a processor and a storage that executing one or more software or firmware programs, an integrated logic circuit, and / or other components that can provide above functions. In addition, the acquisition module 301, the generation module 302, the first confirmation module 303, the second confirmation module 304, and the reminder module 305 may be implemented by a processor in a device 500 described in Fig. 5.

As shown in Fig. 5, the image processing device may be implemented with the structure in Fig. 5. The device 500 includes at least one processor 501, at least one storage 502, and at least one communication interface 503. In addition, the device may also include common components such as an antenna, which will not be described in detail here.

The processor 501 may be a general central processing unit (CPU), a microprocessor, an application-specific integrated circuit (ASIC), or one or more integrated circuits for controlling to execute programs in the above method.

The communication interface 503 is configured to communicate with other devices or communication networks, such as Ethernet, Radio Access Network (RAN), Wireless Local Area Networks (WLAN), etc.

The storage 502 may be a read-only memory (ROM) or other static storage device that may store static information and instructions, a random access memory (RAM) or other dynamic storage device that may store information and instructions, it may also be an Electrically Erasable Programmable Read-Only Memory (EEPROM), a Compact Disc Read-Only Memory, CD-ROM), or, may be other CD Memory, CD-ROM Memories (including compact disks, laser disks, optical disks, digital versatile disks, Blue- ray disks, etc.), magnetic disk storage medias or other magnetic storage devices, or any other media that can be used to carry or store desired program code in a form of instructions or data structures and can be accessed by a computer, but is not limited thereto. The storage may exist independently and be coupled to the processor through a bus. The storage may also be integrated with the processor.

The storage 502 is configured to store application program for executing the above method and is controlled to execute by the processor 501. The processor 501 is configured to execute the application program stored in the storage 502.

In the image processing device shown in Fig. 5, the application program stored in the storage 502 can execute one of the image processing methods provided above, for example, the image processing device acquires N images of the same object at K positions, where K is an integer greater than or equal to 1, and N is greater than or equal to K; the image processing device horizontally splices at least two of the N images to generate a 3D image, and horizontally splicing refers to splicing the images with overlapping parts into at least one seamless image.

The embodiment of the invention also provides a computer storage medium, where the computer storage medium can store a program, and when be executed, the program includes some or all of the steps of any of the image processing methods described in the above embodiments.

It should be noted that, for simplicity of description, all of the image processing methods in the above method embodiments are expressed as a series of combinations of actions, but those skilled in the art will appreciate that the present disclosure is not limited by the described sequence of actions, as some steps may be performed in other sequences or simultaneously, according to the present invention. Secondly, those skilled in the art should also know that the embodiments described in the specification are all preferred embodiments, and the actions and modules involved are not necessarily required for the present disclosure.

In the above-mentioned embodiments, the description of each embodiment has its own emphasis. For those not detailed in one exampled embodiment, please refer to the relevant description of other embodiments.

In several embodiments provided in this application, it should be understood that the disclosed device may be implemented in other ways. For example, the device embodiments described above are only schematic, for example, the division of the units is only a logical function division, and there may be other division modes in actual implementation, for example, multiple units or components may be combined or integrated into another system, or some features may be ignored or not executed. On the other hand, the mutual coupling or direct coupling or communication connection shown or discussed may be indirect coupling or communication connection through some interfaces, devices or units, and which may be in electrical or other forms.

The unit described as a separate unit may or may not be physically separated, and the component as a display unit may or may not be a physical unit, i.e., may be located in one place or may be distributed over multiple network units. Some or all of the units can be selected according to actual needs to achieve the purpose of this embodiment.

In addition, each functional unit in various embodiments of the present disclosure may be integrated in one processing unit, or each unit may be physically and lonely existed, or two or more units may be integrated in one unit. The integrated unit can be implemented in a form of hardware and or in a form of software functional units.

The integrated unit may be stored in a computer readable storage, if implemented in the form of a software functional unit and sold or used as a stand-alone product. According to this, in the other hand, essentially, part of the technical solution contributing to the prior art, or, the technical solution of the present disclosure in part or in whole, may be embodied in a form of a software product, which be stored in a storage, and including several instructions for causing a computer device (which may be a personal computer, a server or a network device, etc.) to perform all or part of the steps of the method described in various embodiments of the present disclosure. The storage includes U disks, Read-Only Memories, Random Access Memories, mobile hard disks, magnetic disks or optical disks and other media capable of storing program code.

Those of ordinary skilled in the art will understand that all or part of the steps in the various methods of the above embodiments can be accomplished by instructing the relevant hardware through a program, which can be stored in a computer readable storage, which can include a flash drive, a Read-Only Memory, a Random Access Memory, a magnetic disk or an optical disk, etc.

The embodiments of the present disclosure have been described above, and the principles and implementations of the present disclosure have been described with specific examples. The above embodiments are only used to help understand the method of the present disclosure and its core ideas. At the same time, for those of ordinary skilled in the art, according to the idea of the present disclosure, there will be changes in the specific implementation and application scope. In view of the above, the contents of this specification should not be construed as limiting the present disclosure.

## Claims

1. An image processing method, comprising:
an image processing device acquiring N images of the same object at K positions, wherein the K is an integer greater than or equal to 1, and the N is greater than or equal to K; and
the image processing device horizontally splicing at least two of the N images, to generate a 3D image, and horizontally splicing being to splice the images having overlapping parts into at least one seamless image.

2. The method of claim 1, wherein when the K is greater than 1, the image processing device acquiring N images of the same object at K positions comprises:
the image processing device acquiring a first image at a position i, wherein i=1, 2, 3..., K- 1; and
the image processing device acquiring a second image at a position i+1 which is a position obtained by moving the image processing device towards a target direction by a preset offset starting from the position i; repeatedly acquiring images until N images are acquired.

3. The method of claim 2, wherein the moving the image processing device towards the target direction by the preset offset comprises:
moving a first offset towards a first direction; or,
moving a second offset towards a second direction; or,
moving a first offset towards a first direction and moving a second offset towards a second direction.

4. The method of claim 3, wherein the first direction comprises a vertically upward direction and a vertical downward direction, and the second direction comprises a horizontally leftward direction or a horizontally rightward direction.

5. The method of claim 1, wherein when the K is equal to 1, the image processing device acquiring N images of the same object at K positions comprises:
the image processing device acquiring a third image at an angle I, wherein 1=1, 2, 3..., N-1; and
the image processing device acquiring a fourth image at an angle 1+1 which is an angle obtained by rotating the image processing device around a rotating axis towards a third direction by a third offset, which rotating axis being a central axis of the image processing device at the angle I; repeatedly acquiring images until N images are acquired.

6. The method of any one of claims 2-5, wherein the image processing device sends an alarm message when the preset offset by which the image processing device moves towards the target direction exceeds a first threshold, or, when the third offset by which the image processing device rotates towards the third direction exceeds a second threshold.

7. The method of claim 6, further comprising:
the image processing device determining similarity of M image sets to obtain M similarity values, the M image sets respectively corresponding to the M similarity values, and each image set of the M image sets comprising two images, and the two images comprising one of the first image and the second image, or, one of the third image and the fourth image; and
the image processing device determining a target image set, the target image set being one of the M image sets, and the corresponding similarity value of the target image set meeting a preset condition;
wherein the image processing device horizontally splicing at least two of the N images to generate a 3D image comprises:
the image processing device horizontally splicing two images in the target image set to generate the 3D image.

8. The method of claim 7, wherein the target image set has the highest similarity value among W image sets, and the W image sets belong to the M image sets, and the similarity values of the W image sets meet the a preset condition.

9. The method of claim 8, wherein resolutions of the two images in the target image set are both higher than a preset resolution.

10. The method of claim 8, further comprising:
the image processing device sending a reminder message to remind users to re-acquire images when the similarity values of the M image sets all fail to meet the a preset condition.

11. An image processing device, comprising :
an acquisition module configured to acquire N images of the same object at K positions, the K being an integer greater than or equal to 1, and the N being greater than or equal to K; and
a generation module configured to horizontally splice at least two of the N images to generate a 3D image, and horizontally splicing being to splice the images having overlapping parts into at least one seamless image.

12. The image processing device of claim 11, wherein when the K is greater than 1, the acquisition module comprises:
a first acquisition unit configured to acquire a first image at a position i, wherein i=1, 2, 3..., K-1; and
a second acquisition unit configured to acquire a second image at a position i+1 which is a position obtained by moving the image processing device towards a target direction by a preset offset starting from the position i; and to repeatedly acquire the images until N images are acquired.

13. The image processing device of claim 12, wherein the moving towards the target direction by the preset offset comprises:
moving a first offset towards a first direction; or,
moving a second offset towards a second direction; or,
moving a first offset towards a first direction and moving a second offset towards a second direction.

14. The image processing device of claim 13, wherein the first direction comprises a vertical up direction or a vertical down direction, and the second direction comprises a horizontal left direction or a horizontal right direction.

15. The image processing device of claim 11, wherein when the K is equal to 1, the acquisition module comprises:
a third acquisition unit configured to acquire a third image at an angle I, wherein 1=1, 2, 3..., N-1; and
a fourth acquisition unit configured to acquire a fourth image at the angle 1+1 which being an angle obtained by rotating the image processing device around a rotating axis towards a third direction by a third offset, which rotating axis being a central axis of the image processing device at the angle I; and to repeatedly acquire the images until N images are acquired.

16. The image processing device of any one of claims 12-15, wherein the image processing device sends an alarm message when the preset offset by which the image processing device moves towards the target direction exceeds a first threshold, or, when the third offset by which the image processing device rotates towards the third direction exceeds a second threshold.

17. The image processing device of claim 16, further comprising:
a first confirmation module configured to determine similarity of M image sets to obtain M similarity values, the M image sets respectively corresponding to the M similarity values, and each image set of the M image sets comprising two images, and which comprising one of the first image and the second image, or, one of the third image and the fourth image; and
a second confirmation module configured to determine a target image set which being one of the M image sets and the corresponding similarity value of which meeting a preset condition;
wherein the generation module is specifically configured to horizontally splice two of the N images to generate the 3D image.

18. The image processing device of claim 17, wherein the target image set has the highest similarity value among W image sets, and the W image sets belong to the M image sets, and the similarity values of the W image sets meet the a preset condition.

19. The image processing device of claim 18, wherein resolutions of the two images in the target image set are both higher than a preset resolution.

20. The image processing device of claim 18, further comprising:
a reminder module configured to send a reminder message to remind users to re-acquire images when the similarity values of the M image sets all fail to meet the a preset condition.
